# EUROPEAN PATENT SPECIFICATION

(11) **EP 3 298 641 B1**
(45) Date of publication and mention of the grant of the patent: **16.09.2020**
(21) Application number: 16709619.7
(22) Date of filing: 12.02.2016
(51) Int. Cl.: H01M 2/04, H01M 2/02, H01M 2/10

(54) **LITHIUM-ION BATTERY MODULE COMPRISING EXPANSION ACCOMODATING ELEMENTS AND METHOD FOR MANUFACTURING COMPRISING HEAT SEAL OF COVER TO BASE OF HOUSING**
LITHIUM-IONEN-BATTERIEMODUL MIT EXPANSIONSAUFNAHMEELEMENTEN UND VERFAHREN ZUR HERSTELLUNG MIT EINER WÄRMEDICHTUNG FÜR DECKEL UND BODEN DES GEHÄUSES
MODULE DE BATTERIE AU LITHIUM-ION COMPRENANT DES ÉLÉMENTS DE RÉCEPTION DE DILATATION ET PROCÉDÉ DE FABRICATION COMPRENANT UN THERMOSCELLAGE DE COUVERCLE À BASE DE BOÎTIER

(30) Priority: 18.05.2015 US 201514715357
(43) Date of publication of application: 28.03.2018
(73) Proprietor: CPS Technology Holdings LLC, New York, New York 10281 (US)
(72) Inventor: MACK, Robert, J., Milwaukee, WI 53202 (US); DEKEUSTER, Richard, M., Racine, WI 53402 (US); CZARNECKI, Jennifer, L., Franklin, WI 53132 (US); LOBERT, Jonathan, P., Hartford, WI 53027 (US)
(74) Representative: Trinks, Ole
(86) International application number: PCT/US2016/017653
(87) International publication number: WO 2016/186707

(56) References cited:
- WO-A1-2013/164932
- WO-A1-2014/021891
- WO-A1-2016/048568
- WO-A2-2015/013624
- US-A1- 2005 238 955
- US-A1- 2012 308 869
- US-A1- 2014 014 420
- US-A1- 2015 030 890

## Description

### BACKGROUND

The present disclosure relates generally to the field of batteries and battery modules. More specifically, the present disclosure relates to a system and method for sealing a housing and a cover of a lithium-ion (Li-ion) battery module.

This section is intended to introduce the reader to various aspects of art that may be related to various aspects of the present disclosure, which are described below. This discussion is believed to be helpful in providing the reader with background information to facilitate a better understanding of the various aspects of the present disclosure. Accordingly, it should be understood that these statements are to be read in this light, and not as admissions of prior art.

A vehicle that uses one or more battery systems for providing all or a portion of the motive power for the vehicle can be referred to as an xEV, where the term "xEV" is defined herein to include all of the following vehicles, or any variations or combinations thereof, that use electric power for all or a portion of their vehicular motive force. For example, xEVs include electric vehicles (EVs) that utilize electric power for all motive force. As will be appreciated by those skilled in the art, hybrid electric vehicles (HEVs), also considered xEVs, combine an internal combustion engine propulsion system and a battery-powered electric propulsion system, such as 48 Volt (V) or 130V systems. The term HEV may include any variation of a hybrid electric vehicle. For example, full hybrid systems (FHEVs) may provide motive and other electrical power to the vehicle using one or more electric motors, using only an internal combustion engine, or using both. In contrast, mild hybrid systems (MHEVs) disable the internal combustion engine when the vehicle is idling and utilize a battery system to continue powering the air conditioning unit, radio, or other electronics, as well as to restart the engine when propulsion is desired. The mild hybrid system may also apply some level of power assist, during acceleration for example, to supplement the internal combustion engine. Mild hybrids are typically 96V to 130V and recover braking energy through a belt or crank integrated starter generator. Further, a micro-hybrid electric vehicle (mHEV) also uses a "Stop-Start" system similar to the mild hybrids, but the micro-hybrid systems of a mHEV may or may not supply power assist to the internal combustion engine and operates at a voltage below 60V. For the purposes of the present discussion, it should be noted that mHEVs typically do not technically use electric power provided directly to the crankshaft or transmission for any portion of the motive three of the vehicle, but an mHEV may still be considered as an xEV since it does use electric power to supplement a vehicle's power needs when the vehicle is idling with internal combustion engine disabled and recovers braking energy through an integrated starter generator. In addition, a plug-in electric vehicle (PEV) is any vehicle that can be charged from an external source of electricity, such as wall sockets, and the energy stored in the rechargeable battery packs drives or contributes to drive the wheels. PEVs are a subcategory of EVs that include all-electric or battery electric vehicles (BEVs), plug-in hybrid electric vehicles (PHEVs), and electric vehicle conversions of hybrid electric vehicles and conventional internal combustion engine vehicles.

xEVs as described above may provide a number of advantages as compared to more traditional gas-powered vehicles using only internal combustion engines and traditional electrical systems, which are typically 12V systems powered by a lead acid battery. For example, xEVs may produce fewer undesirable emission products and may exhibit greater fuel efficiency as compared to traditional internal combustion vehicles and, in some cases, such xEVs may eliminate the use of gasoline entirely, as is the case of certain types of EVs or PEVs.

As technology continues to evolve, there is a need to provide improved power sources, particularly battery modules, for such vehicles. For example, traditional lithium-ion (Li-ion) battery modules may include Li-ion electrochemical cells disposed in a housing. Traditionally, housings of Li-ion battery modules are metal or include a substantial amount of metal because metal is more resilient to forces exerted against the housing via thermal expansion of the Li-ion electrochemical cells caused by the internal chemistry of the Li-ion electrochemical cells. Unfortunately, metal is expensive, and coupling techniques and mechanisms for coupling a cover of the metal housing to a base of the metal housing is also expensive. Thus, it is now recognized that there is a need for improved Li-ion battery modules and for improved techniques and mechanisms for accommodating swelling of the Li-ion electrochemical cells and coupling certain components of the housing together.

WO2013164932 and US20140014420 disclose a battery apparatus comprising expansion accommodating elements between cells. US2005238955 discloses a method of welding a plastic cover to a plastic casing body of a lead-acid battery.

### SUMMARY

A summary of certain embodiments disclosed herein is set forth below. It should be understood that these aspects are presented merely to provide the reader with a brief summary of these certain embodiments and that these aspects are not intended to limit the scope of this disclosure. Indeed, this disclosure may encompass a variety of aspects that may not be set forth below.

The present disclosure relates to a battery module having lithium-ion (Li-ion) electrochemical cells disposed in a row and expansion accommodating elements. Each expansion accommodating element is configured to accommodate swelling of one or more Li-ion electrochemical cell such that a footprint of the row of Li-ion electrochemical cells is substantially constant during operation of the battery module. The battery module also includes a plastic housing having a main body configured to receive the Li-ion electrochemical cells, and a cover heat sealed to a surface of the main body.

The present disclosure also relates to a battery module having a plastic housing. The plastic housing includes a base and a cover coupled to the base, where the base contains lithium-ion (Li-ion) electrochemical cells, the cover includes a skirt extending downwardly toward the base of the plastic housing and around a first perimeter of the cover, the base of the plastic housing includes a lip extending upwardly toward the cover and around a second perimeter of the base, and the lip of the base is heat sealed to an inner surface of the cover disposed inwards from the skirt of the cover such that the skirt of the cover and the lip of the base overlap along a height of the battery module.

The present disclosure also relates to a method of manufacturing a battery module. The method includes disposing lithium-ion (Li-ion) electrochemical cells into a base of a housing of the battery module, disposing separator plates into the base such that the separator plates and the Li-ion electrochemical cells are disposed in a row having an alternating arrangement of Li-ion electrochemical cells and separator plates, where the separator plates are configured to enable thermal expansion of the Li-ion electrochemical cells while maintaining a footprint of the row, disposing a cover of the housing over the base of the housing, and heat sealing the cover to the base with the Li-ion electrochemical cells in the base.

### DRAWINGS

Various aspects of this disclosure may be better understood upon reading the following detailed description and upon reference to the drawings in which;
FIG. 1 is a perspective view of a vehicle having a battery system configured in accordance with present embodiments to provide power for various components of the vehicle;
FIG. 2 is a cutaway schematic view of an embodiment of the vehicle and the battery system of FIG. 1;
FIG. 3 is a exploded overhead perspective view of an embodiment of a battery module for use in the vehicle of FIG. 1, in accordance with an aspect of the present disclosure;
FIG. 4 is an exploded overhead perspective view of an embodiment of a housing for use in the battery module of FIG. 3, in accordance with an aspect of the present disclosure;
FIG. 5 is an assembled schematic cross-sectional side view of an embodiment of the housing of FIG. 4 taken along lines 5-5 in FIG. 4, in accordance with an aspect of the present disclosure;
FIG. 6 is a side view of an embodiment of the battery module of FIG. 3 and a heating element, in accordance with an aspect of the present disclosure;
FIG. 7 is a top view of an embodiment of the heating element of FIG. 6, in accordance with an aspect of the present disclosure;
FIG. 8 is a top view of an embodiment of a group of electrochemical cells, separator plates, and other components for use in the battery module of FIG. 3, in accordance with an aspect of the present disclosure;
FIG. 9 is a perspective view of an embodiment of one of the separator plates of FIG. 8, in accordance with an aspect of the present disclosure; and
FIG. 10 is a process flow diagram illustrating a method of manufacturing the battery module of Fig. 3, in accordance with an aspect of the present disclosure.

### DETAILED DESCRIPTION

One or more specific embodiments will be described below. In an effort to provide a concise description of these embodiments, not all features of an actual implementation are described in the specification. It should be appreciated that in the development of any such actual implementation, as in any engineering or design project, numerous implementation-specific decisions must be made to achieve the developers specific goals, such as compliance with system-related and business-related constraints, which may vary from one implementation to another. Moreover, it should be appreciated that such a development effort might be complex and time consuming, but would nevertheless be a routine undertaking of design, fabrication, and manufacture for those of ordinary skill having the benefit of this disclosure.

The battery systems described herein may be used to provide power to various types of electric vehicles (xEVs) and other high voltage energy storage/expending applications (e.g., electrical grid power storage systems). Such battery systems may include one or more battery modules, each battery module having a number of battery cells (e.g., Lithium-ion (Li-ion) electrochemical cells) arranged to provide particular voltages and/or currents useful to power, for example, one or more components of an xEV. As another example, battery modules in accordance with present embodiments may be incorporated with or provide power to stationary power systems (e.g., non-automotive systems).

In accordance with embodiments of the present disclosure, the battery module may include a group of electrically interconnected electrochemical cells (e.g., prismatic lithium-ion [Li-ion] electrochemical cells) disposed in a housing (e.g., a plastic housing) of the battery module, The housing may include a main body or a base configured to receive the electrochemical cells, and a cover configured to seal against a surface of the main body to enclose the electrochemical cells within the housing. For example, the cover may be heat sealed against a lip of the main body of the housing, which may be cheaper and/or more robust than other coupling techniques and mechanisms (e.g., such as fasteners or adhesive). The housing (e.g., the main body and the cover) may be made of plastic (e.g., without any metal components), which reduces a cost of the battery module compared to embodiments with metal components.

Because the internal chemistry of Li-ion electrochemical cells may cause the Li-ion electrochemical cells to swell (e.g., thermally expand) during operation of the battery module, expansion accommodating features may be included in present embodiments of the battery module to block or resist swelling (e.g., expanding) of the electrochemical cells into the housing. For example, without expansion accommodating features, some types of electrochemical cells may expand into the plastic housing, thereby causing components of the plastic housing (e.g., the main body of the housing and the cover of the housing heat sealed to the main body) to pull away from each other and/or deform during operation of the battery module. In other words, because the housing is made substantially of plastic (e.g., without metal), the housing may be susceptible to deformation or undesired disassembly in the presence of forces exerted against the housing by thermally expanding Li-ion electrochemical cells. However, the expansion accommodating features of the battery module may enable certain Li-ion electrochemical cells to swell without the cells exerting substantial forces against the plastic housing. Thus, the expansion accommodating features enable use of a plastic housing (e.g., an all-plastic housing) to reduce a cost of the battery module, while accommodating expansion of the Li-ion electrochemical cells during operation of the battery module.

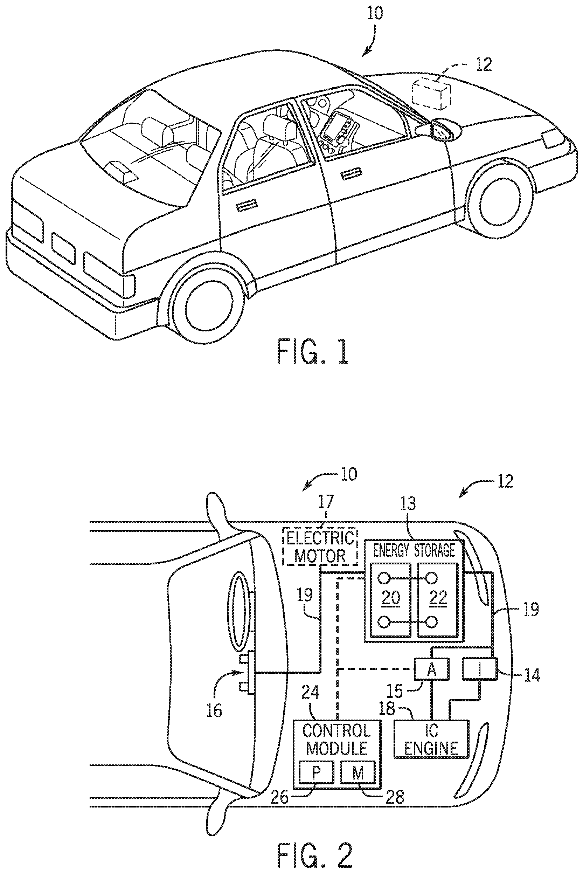

To help illustrate, FIG. 1 is a perspective view of an embodiment of a vehicle 10, which may utilize a regenerative braking system. Although the following discussion is presented in relation to vehicles with regenerative braking systems, the techniques described herein are adaptable to other vehicles that capture/store electrical energy with a battery, which may include electric-powered and gas-powered vehicles.

As discussed above, it would be desirable for a battery system 12 to be largely compatible with traditional vehicle designs. Accordingly, the battery system 12 may be placed in a location in the vehicle 10 that would have housed a traditional battery system. For example, as illustrated, the vehicle 10 may include the battery system 12 positioned similarly to a lead-acid battery of a typical combustion-engine vehicle (e.g., under the hood of the vehicle 10). Furthermore, as will be described in more detail below, the battery system 12 may be positioned to facilitate managing temperature of the battery system 12. For example, in some embodiments, positioning a battery system 12 under the hood of the vehicle 10 may enable an air duct to channel airflow over the battery system 12 and cool the battery system 12.

A more detailed view of the battery system 12 is described in FIG. 2. As depicted, the battery system 12 includes an energy storage component 13 coupled to an ignition system 14, an alternator 15, a vehicle console 16, and optionally to an electric motor 17. Generally, the energy storage component 13 may capture/store electrical energy generated in the vehicle 10 and output electrical energy to power electrical devices in the vehicle 10.

In other words, the battery system 12 may supply power to components of the vehicle's electrical system, which may include radiator cooling fans, climate control systems, electric power steering systems, active suspension systems, auto park systems, electric oil pumps, electric super/turbochargers, electric water pumps, heated windscreen/defrosters, window lift motors, vanity lights, tire pressure monitoring systems, sunroof motor controls, power seats, alarm systems, infotainment systems, navigation features, lane departure warning systems, electric parking brakes, external lights, or any combination thereof. Illustratively, in the depicted embodiment, the energy storage component 13 supplies power to the vehicle console 16 and the ignition system 14, which may be used to start (e.g., crank) the internal combustion engine 18.

Additionally, the energy storage component 13 may capture electrical energy generated by the alternator 15 and/or the electric motor 17. In some embodiments, the alternator 15 may generate electrical energy while the internal combustion engine 18 is running. More specifically, the alternator 15 may convert the mechanical energy produced by the rotation of the internal combustion engine 18 into electrical energy. Additionally or alternatively, when the vehicle 10 includes an electric motor 17, the electric motor 17 may generate electrical energy by converting mechanical energy produced by the movement of the vehicle 10 (e.g., rotation of the wheels) into electrical energy. Thus, in some embodiments, the energy storage component 13 may capture electrical energy generated by the alternator 15 and/or the electric motor 17 during regenerative braking. As such, the alternator 15 and/or the electric motor 17 are generally referred to herein as a regenerative braking system.

To facilitate capturing and supplying electric energy, the energy storage component 13 may be electrically coupled to the vehicle's electric system via a bus 19. For example, the bus 19 may enable the energy storage component 13 to receive electrical energy generated by the alternator 15 and/or the electric motor 17. Additionally, the bus 19 may enable the energy storage component 13 to output electrical energy to the ignition system 14 and/or the vehicle console 16. Accordingly, when a 12 volt battery system 12 is used, the bus 19 may carry electrical power typically between 8-18 volts.

Additionally, as depicted, the energy storage component 13 may include multiple battery modules. For example, in the depicted embodiment, the energy storage component 13 includes a lithium ion (e.g., a first) battery module 20 in accordance with embodiments of the present disclosure (e.g., having a plastic housing) and a lead-acid (e.g., a second) battery module 22, which each includes one or more battery cells. In other embodiments, the energy storage component 13 may include any number of battery modules. Additionally, although the lithium ion battery module 20 and lead-acid battery module 22 are depicted adjacent to one another, they may be positioned in different areas around the vehicle. For example, the lead-acid battery module 22 may be positioned in or about the interior of the vehicle 10 while the lithium ion battery module 20 may be positioned under the hood of the vehicle 10.

In some embodiments, the energy storage component 13 may include multiple battery modules to utilize multiple different battery chemistries. For example, when the lithium ion battery module 20 is used, performance of the battery system 12 may be improved since the lithium ion battery chemistry generally has a higher coulombic efficiency and/or a higher power charge acceptance rate (e.g., higher maximum charge current or charge voltage) than the lead-acid battery chemistry. As such, the capture, storage, and/or distribution efficiency of the battery system 12 may be improved.

To facilitate controlling the capturing and storing of electrical energy, the battery system 12 may additionally include a control module 24. More specifically, the control module 24 may control operations of components in the battery system 12, such as relays (e.g., switches) within energy storage component 13, the alternator 15, and/or the electric motor 17. For example, the control module 24 may regulate amount of electrical energy captured/supplied by each battery module 20 or 22 (e.g., to de-rate and re-rate the battery system 12), perform load balancing between the battery modules 20 and 22, determine a state of charge of each battery module 20 or 22, determine temperature of each battery module 20 or 22, control voltage output by the alternator 15 and/or the electric motor 17, and the like.

Accordingly, the control unit 24 may include one or more processor 26 and one or more memory 28. More specifically, the one or more processor 26 may include one or more application specific integrated circuits (ASICs), one or more field programmable gate arrays (FPGAs), one or more general purpose processors, or any combination thereof. Additionally, the one or more memory 28 may include volatile memory, such as random access memory (RAM), and/or non-volatile memory, such as read-only memory (ROM), optical drives, hard disc drives, or solid-state drives, In some embodiments, the control unit 24 may include portions of a vehicle control unit (VCU) and/or a separate battery control module.

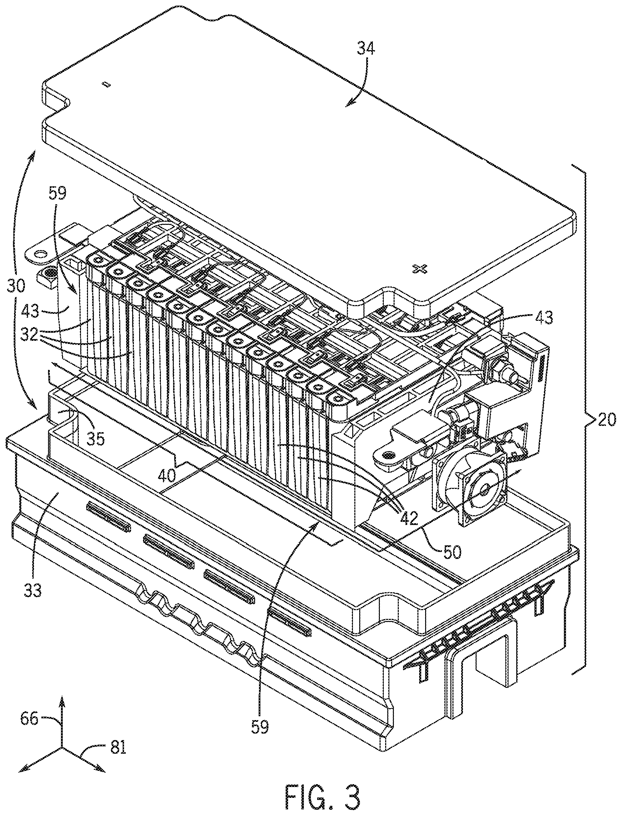

Turning now to FIG. 3, an exploded overhead perspective view of an embodiment of the battery module 20 for use in the vehicle 10 of FIG. 1 is shown. In the illustrated embodiment, the battery module 20 includes a housing 30 configured to receive electrochemical cells 32 (e.g., prismatic lithium-ion [Li-ion] electrochemical cells) of the battery module 20. For example, the electrochemical cells 32 may be stored in a row 40 or in multiple rows within a base 33 (e.g., main body) of the housing 30. A cover 34 of the housing 30 may be disposed over the electrochemical cells 32 and may be sealed (e.g., heat sealed or welded) against a lip 35 or some other surface of the base 33 of the housing 30.

In accordance with present embodiments, the housing 30 (e.g., the base 33 and the cover 34) may be made partially or entirely of plastic. For example, the housing 30 may include a polymer-based plastic (e.g., polypropylene, polyethylene, high-density polyethylene, low-density polyethylene, etc.). In some embodiments, the housing 30 may also include glass content to provide additional structural rigidity to the housing 30. To seal the cover 34 to the base 33, a heating element may be disposed between the cover 34 and the base 33 during manufacturing of the battery module 20 such that the cover 34, the base 33, or both are heated until the plastic proximate to the heating element melts slightly. As the cover 34 and the base 33 are pressed together, or as the cover 34 and the base 33 come into contact with one another, the melted plastic cools and fuses together, thereby coupling the cover 34 to the base 33. It should be noted, however, that the housing 30 may include a metal layer or film in portions of the housing 30. For example, the cover 34 may include a metal film in a central area of the cover 34 that reinforces the cover 34 and/or enables better performance of a vent that may, in some embodiments, be disposed in the cover 34.

Because the housing 30 is made entirely or mostly of plastic (e.g., with some glass content), the housing 30 may not be as resilient to forces exerted against the housing 30 as, for example, a housing made mostly or entirely of metal would be. Thus, the battery module 20 may include features configured to accommodate thermal expansion of the electrochemical cells 32 (e.g., during operation of the battery module 20) such that the electrochemical cells 32 do not exert substantial forces against the housing 30, which may otherwise cause the housing 30 to deform slightly and/or cause the cover 34 of the housing 30 to pull away from the base 33 of the housing 30 along the heat sealed region between the cover 34 and the base 33, as previously described.

In accordance with embodiments of the present disclosure, the battery module 20 may include separator plates 42 (or other expansion accommodating features or elements) configured to accommodate swelling of the electrochemical cells 32 during operation of the battery module 20. As shown, the row 40 of electrochemical cells 32 also includes the separator plates 42. For example, the row 40 may include an alternating arrangement of electrochemical cells 32 and separator plates 42. In other words, each separator plate 42 may include one electrochemical cell 32 on either side of the separator plate 42, and each electrochemical cells 32 may include one separator plate 42 on either side of the electrochemical cell 32. The separator plates 42 may separate adjacent electrochemical cells 32 slightly, and may include cavities or windows configured to receive expanding portions of the electrochemical cells 32. Accordingly, the electrochemical cells 32 are permitted to swell into the cavities or windows of the separator plates 42, such that a footprint 50 of the row 40 of electrochemical cells 32 and separator plates 42 remains substantially constant during operation of the battery module 20 (e.g., less than 105% of the footprint 50 prior to operation, less than 103% of the footprint 50 prior to operation, or less than 101% of the footprint 50 prior to operation). It should be noted that the separator plates 42 may be made entirely or partially of plastic or some other inexpensive material. Further, the separator plates 42 may serve to electrically isolate certain portions of adjacent electrochemical cells 32, in addition to accommodating swelling (e.g., thermal expansion) of the electrochemical cells 32.

In accordance with present embodiments, the battery module 20 may also include retaining walls 43 disposed at either end 59 of the row 40 of electrochemical cells 32 and separator plates 42. For example, one or more retaining walls 43 (e.g., removable retaining walls) may be provided at the ends 59 of the row 40. The retaining walls 43 may be generally rectangular prisms (e.g., blocks, plates) formed of any suitable material or combination of materials, such as polymers having different degrees of hardness and/or strength, relatively compressible materials such as silicone, breakable and rigid materials such as glass, or composite materials such as glass-filed polypropylene. Further, the retaining walls 43 may include a truss-like structure (e.g., with rectangular truss structures). In general, the retaining walls 43 provide structural rigidity to the battery module 20 by absorbing forces exerted against the retaining walls 43 via expansion of the electrochemical cells 32. The retaining walls 43 may be used to compress the row 40 of electrochemical cells 32 and separator plates 42 after the row 40 is inserted into the housing 30, or the row 40 and/or the retaining walls 43 may be compressed together prior to insertion into the housing 30. It should be noted that, in some embodiments, the base 33 of the housing 30 may include glass content and the retaining walls 43 may or may not be included.

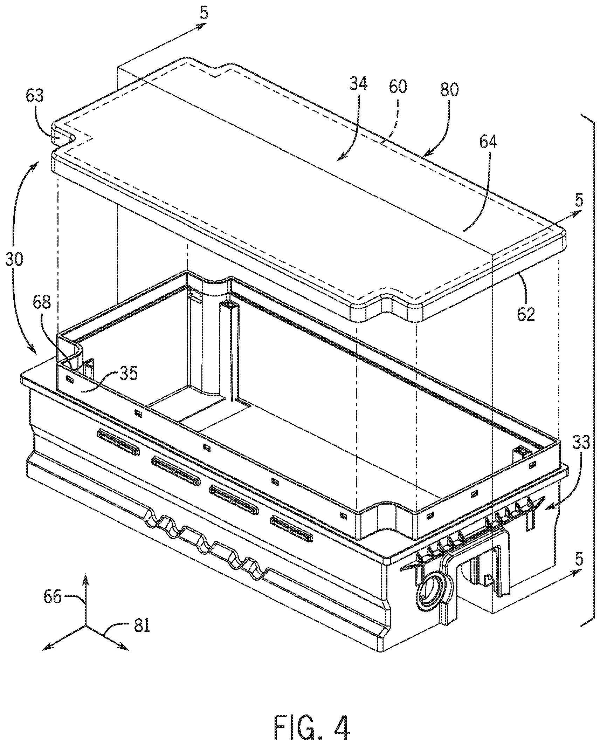

An exploded overhead perspective view of an embodiment of the housing 30 is shown in FIG. 4. In the illustrated embodiment, the housing 30 includes the cover 34 and the base 33, as previously described. The cover 34 is configured to be heat sealed (e.g., welded) to the base 33 along, for example, the lip 35 of the base 33. As shown, the cover 34 may be heat sealed to the lip 35 of the base 33 along a sealing path 60 on a bottom surface 62 of the cover 34 opposite to a top surface 64 of the cover 34. It should be noted that the sealing path 60 may be disposed inward on the cover 34 from a perimeter 63 of the cover 34. As will be described in detail with reference to later figures, the perimeter 63 of the cover 34 may include a skirt (e.g., downward lip) extending downwardly (e.g., opposite to direction 66) from the bottom surface 62 of the cover 34. Thus, the skirt of the cover 34 may overlap with the lip 35 of the base 33 along direction 66 (e.g., along a height of the battery module 20), and a top surface 68 of the lip 35 of the base 33 may be heat sealed to the sealing path 60 extending along the bottom surface 62 of the cover 34.

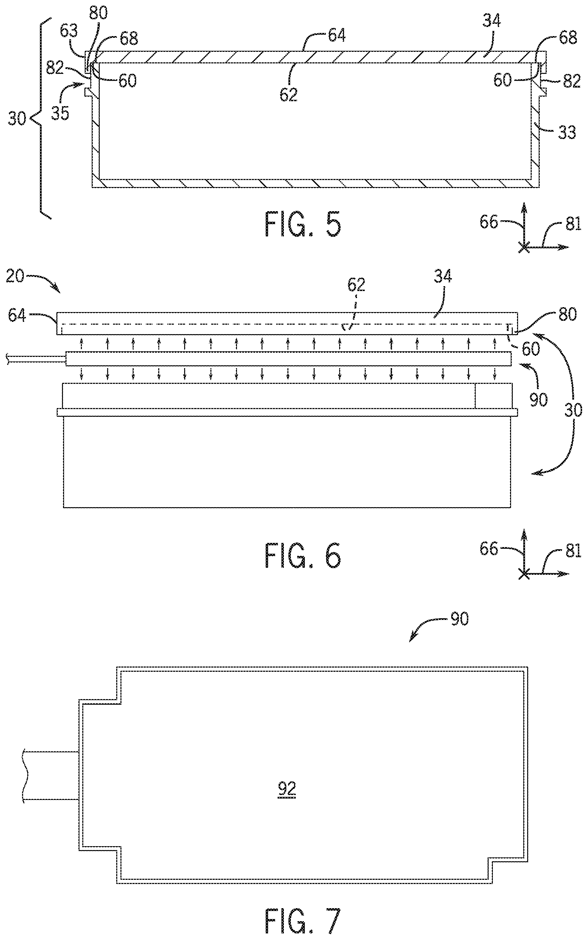

For example, a schematic cross-sectional side view of an assembled embodiment of the housing 30 of FIG. 4, taken along lines 5-5 in FIG. 4, is shown in FIG. 5. In the illustrated embodiment, as previously described, the lip 35 of the base 33 of the housing 30 extends upwardly (e.g., in direction 66) toward the cover 34. Further, a skirt 80 of the cover 34 extends downwardly (e.g., opposite to direction 66) toward the base 33. Further still, the skirt 80 of the cover 34 is disposed outside of the lip 35 of the base 33 (e.g., along direction 81). For example, the lip 35 of the base 33 and the skirt 80 of the cover 34 are disposed in a nested arrangement, with the lip 35 nested inwards from the skirt 80. In other words, the skirt 80 of the cover 34 encircles the lip 35 of the base 33, and the top surface 68 of the lip 35 of the base 33 is heat sealed to the bottom surface 62 of the cover 34 along the sealing path 60 of the cover 34. During manufacturing, the sealing path 60 of the cover 34, the lip 35 of the base 33, or both may be heated prior to pressing the cover 34 and the base 33 together, causing melted material of the cover 34 and/or base 33 to fuse together as the melted material cools. It should be noted that the material may be melted to such an extent that the cover 34 and the base 33 are pressed together only by the weight of the cover 34 on the lip 35 (e.g., without additional force), or only by the weight of the base 33 onto the cover 34 (e.g., without additional force), depending on the orientation of the housing 30 to seal the cover 34 to the base 33. As the material is cooled and fuses together, some of the material may move from its original position (e.g., original position prior to heat sealing of the cover 34 and the base 33). This may cause the material to form ridges, bumps, or other aesthetically displeasing features on a peripheral surface 82 of the lip 35 of the base 33. However, by disposing the skirt 80 of the cover 34 outside of the periphery surface 82 of the lip 35 of the base 33, the aesthetically displeasing features (e.g., the material) may be partially or entirely hidden from view, causing the housing 30 to appear more aesthetically pleasing for potential customers. It should be noted that, in some embodiments, a clearance (e.g., space, radial space, radial clearance) may be disposed between the skirt 80 of the cover 34 and the peripheral surface 82 of the lip 35 of the base 33 (e.g., a clearance having a width along direction 81), and the aesthetically displeasing features (e.g., melted portions of the housing 30) that may be caused during the heat sealing process may extend into the clearance, but may be hidden from view by the skirt 80.

In FIG. 6, an embodiment of the housing 30 (e.g., the cover 34 and the base 33) is shown with a heating element 90 disposed between the cover 34 and the base 33. During manufacturing of the battery module 20, the cover 34 and the base 33 of the housing 30 may be disposed in close proximity to one another, with the heating element 90 disposed between the cover 34 and the base 33. After the heating element 90 permeates heat upwardly (e.g., in direction 66) toward the cover 34 to at least partially melt the plastic along the sealing path 60 on the bottom surface 62 of the cover 34, downwardly (e.g., opposite to direction 66) toward the base 33 to at least partially melt the plastic along the top surface 68 of the lip 35 of the base 33, or both, the heating element 90 is removed from between the cover 34 and the base 33. The cover 34 is then pressed into the top surface 68 of the lip 35 of the base 33 along the sealing path 60 of the cover 34 such that the melted plastic cools and fuses together, thereby coupling the cover 34 to the base 33. It should be noted that the pressing of the cover 34 onto the lip 35 of the base 33 may include only the weight of the cover 34 (e.g., without any additional force).

A top view of an embodiment of the heating element 90 is shown in FIG. 7. As shown, the heating element 90 may include a similar shape as that of the sealing path 60 on the cover 34, the upper surface 68 of the lip 35 of the base 33, or both. In other words, the heating element 90 may encircle an empty space 92, thereby enabling the heating element 90 to provide heat to the cover 34 and/or to the base 33 without heating the electrochemical cells 32 (e.g., shown in FIG. 3) that are positioned proximate to the empty space 92 during the manufacturing process.

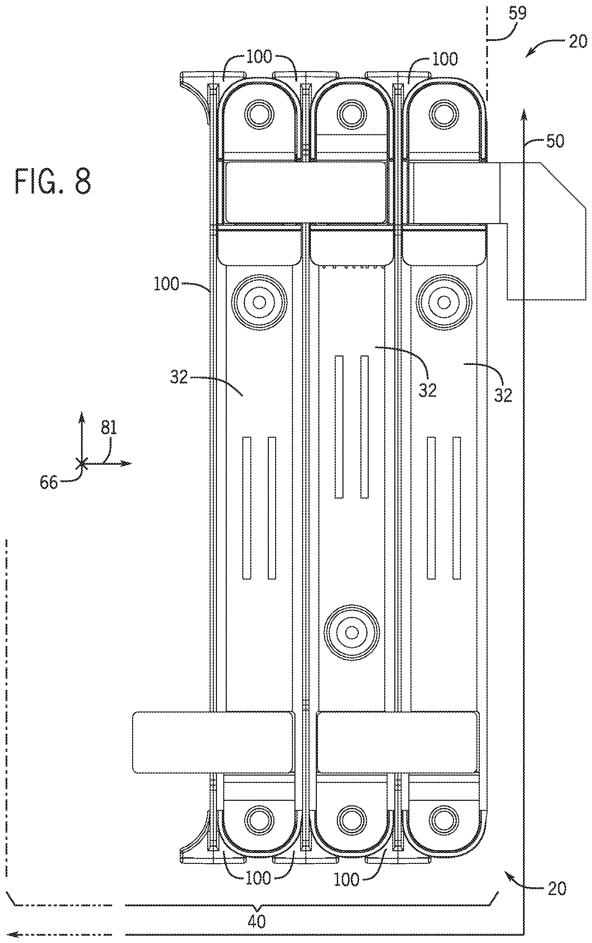

As previously described, during operation of the battery module 20 (e.g., following the heat sealing of the cover 34 of the housing 30 to the base 33 of the housing 30), the electrochemical cells 32 (e.g., Li-ion electrochemical cells) may thermally expand due at least in part to the internal chemistry of the electrochemical cells 32. Accordingly, the battery module 20 may include expansion accommodating elements configured to enable thermal expansion of the electrochemical cells 32 and block the electrochemical cells 32 from exerting forces against the housing 30. For example, a top view of an embodiment of the row 40 (or a portion of the row 40) of electrochemical cells 32, separator plates 100, and certain other components of the battery module 20 is shown in FIG. 8. In the illustrated embodiment, as previously described, the row 40 includes an alternating arrangement of separator plates 100 and electrochemical cells 32. In other words, each electrochemical cell 32 may include a separator plate 100 on either side of the electrochemical cell 32. The electrochemical cell 32 proximate to the end 59 of the row 40 may not include a separator plate 100 proximate to end 59. However, in another embodiment, the electrochemical cells 32 at the ends 59 of the row 40 may still include a separator plate 100 on either side of the electrochemical cell 32. Additionally or alternatively, a retaining wall (e.g., the retaining wall 43 in FIG. 3) may be included at the end 59 of the row 40 to offer additional structural rigidity and to accommodate swelling of the electrochemical cells 32.

As previously described, the separator plates 100 may serve to electrically isolate certain components of adjacent electrochemical cells 32, in addition to enabling thermal expansion of the electrochemical cells 32 into features of the separator plates 100. Thus, the footprint 50 of the row 40 remains substantially constant during operation of the battery module 20. In other words, the separator plates 100 block the electrochemical cells 32 from expanding into the housing 30 (e.g., in FIGS. 3-6) of the battery module 20. Otherwise, the housing 30 (e.g., which is made partially or entirely of plastic) may deform and/or components of the housing 30 (e.g., the cover 34 and the base 33) may pull away from one another, as previously described.

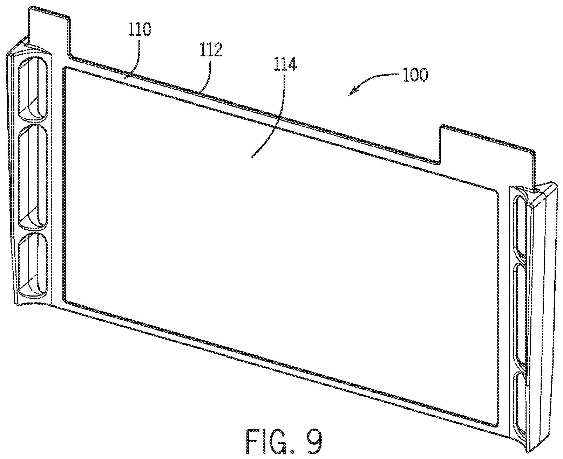

A perspective view of an embodiment of one of the separator plates 100 of FIG. 8 is shown in FIG. 9. In the illustrated embodiment, the separator plate 100 includes a first side 110 and a second side 112 opposite to the first side 110, wherein the first and second sides 110, 112 are separated by a thickness of the separator plate 100. As shown, a recess 114 (e.g., cavity, window, indention) may be disposed in the first side 110. The recess 114 on the first side 110 of the separator plate 100 may be sized and configured to receive swelling of an electrochemical cell (e.g., one of the electrochemical cells 32 in FIG. 8) disposed adjacent to the first side 110 of the separator plate 100. It should be noted that a similar or substantially same recess may also be disposed on the second side 112 of the separator plate 100 such that an electrochemical cell (e.g., one of the electrochemical cells 32 in FIG. 8) disposed adjacent to the second side 112 is permitted to swell into the similar or substantially same recess on the second side 112.

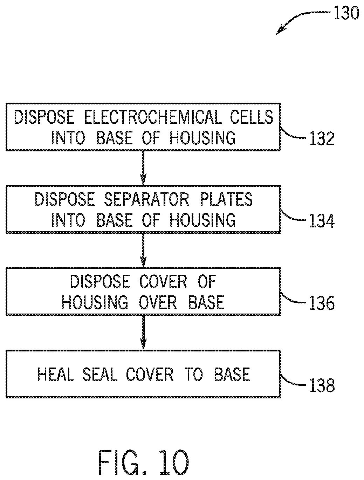

A process flow diagram of an embodiment of a method 130 of manufacturing the battery module 20 of FIG. 3 is shown in FIG. 10. In the illustrated embodiment, the method 130 includes disposing the electrochemical cells 32 into the base 33 of the housing 30 of the battery module 20 (block 132). For example, the electrochemical cells 32 may be disposed into the row 40 having the footprint 50, as previously described.

The method 130 also includes disposing the separator plates 100 into the base 33 such that the separator plates 100 and the electrochemical cells 32 are disposed in the row 40 in an alternating order, as previously described (block 134). In general, the separator plates 100 are configured to enable thermal expansion of the electrochemical cells 32 (e.g., during operation of the battery module 20) such that the footprint 50 of the row 40 remains constant.

The method 130 also includes disposing the cover 34 of the housing 30 over the base 33 of the housing 30 (block 136). Further, the method 130 includes heat sealing the cover 34 to the base 33 (block 138). For example, the method 130 may include forming the cover 34 such that the cover 34 includes the skirt 80, as previously described, where the skirt 80 extends downwardly toward the base 33. The base 33 may be formed such that the base 33 includes the lip 35 extending upwardly from the base 33 and toward the cover 34. The cover 34 may be heat sealed to the lip 35 of the base 33 such that the skirt 80 is disposed outwardly from the lip 35 along a height of the battery module 20.

It should be noted that, as previously described, the method 130 may include blocking heating of the electrochemical cells 32 during the heat sealing process between the cover 34 and the base 33. For example, the heating element 90 may only heat along the lip 35 of the base 33 and the sealing path 60 of the cover 34. In some embodiments, the heating element 90 may be shaped such that the heating element 90 surrounds the area proximate to which the electrochemical cells 32 are disposed. Thus, the heating element 90 heats only the cover 34, the base 33, or both, without substantially heating the electrochemical cells 32 (e.g., by directing heat particularly toward the cover 34 and the base 33 and not the electrochemical cells 32).

One or more of the disclosed embodiments, alone or in combination, may provide one or more technical effects useful in the manufacture of battery modules, and portions of battery modules. For example, in accordance with present embodiments, a lithium-ion (Li-ion) battery module may include a housing made entirely or mostly of plastic, which is cheaper than metal. Further, a cover of the housing may be heat sealed to a base of the housing, which may be cheaper and/or more robust than other coupling techniques and mechanisms (e.g., such as fasteners or adhesive), In order to enable the use of the plastic housing (e.g., an all-plastic housing having the cover and the base), separator plates may be included in the battery module to accommodate swelling of the Li-ion electrochemical cells disposed in the housing such that the Li-ion electrochemical cells do not exert a substantial force against the housing, which may otherwise negatively affect the structural integrity of the housing and its components. The technical effects and technical problems in the specification are exemplary and are not limiting. It should be noted that the embodiments described in the specification may have other technical effects and can solve other technical problems.

The specific embodiments described above have been shown by way of example, and it should be understood that these embodiments may be susceptible to various modifications and alternative forms.

## Claims

1. A battery module (20), comprising:
- a plurality of lithium-ion (Li-ion) electrochemical cells (32) disposed in a row (40);
- a plurality of expansion accommodating elements, each expansion accommodating element being configured to accommodate swelling of one or more Li-ion electrochemical cells (32) such that a footprint (50) of the row (40) of the plurality of Li-ion electrochemical cells (32) is substantially constant during operation of the battery module (20); and
- a plastic housing (30) having a main body (33) configured to receive the plurality of Li-ion electrochemical cells (32), and a cover (34) heat sealed to a surface (68) of the main body (33);
wherein the cover (34) of the plastic housing (30) comprises a skirt (80) extending downwardly toward the main body (33) of the plastic housing (30) and around a first perimeter (63) of the cover (34), wherein the main body (33) of the plastic housing (30) comprises a lip (35) extending upwardly toward the cover (34) and around a second perimeter of the main body (33), and wherein the lip (35) of the main body (33) is heat sealed to an inner surface of the cover (34) disposed inwards from the skirt (80) of the cover (34) such that the skirt (80) of the cover (34) and the lip (35) of the main body (33) overlap along a height of the battery module (20).

2. The battery module (20) of claim 1,
wherein the plurality of expansion accommodating elements comprises a plurality of separator plates (42, 100), and wherein each separator plate (42, 100) of the plurality of separator plates (42, 100) is disposed between a corresponding first and second Li-ion electrochemical cell (32) of the plurality of Li-ion electrochemical cells (32).

3. The battery module (20) of claim 2,
wherein each separator plate (100) comprises a first side (110) facing the first Li-ion electrochemical cell (32) and a second side (112) facing the second Li-ion electrochemical cell (32), wherein the first side (110) of the separator plate (100) comprises a first recess (114) configured to accommodate swelling of the first Li-ion electrochemical cell (32) into the first recess (114) and the second side (112) of the separator plate (100) comprises a second recess (114) configured to accommodate swelling of the second Li-ion electrochemical cell (32) into the second recess (114).

4. The battery module (20) of one of claims 1 to 3,
wherein the skirt (80) is positioned relative to the lip (35) such that an radial space is disposed between the skirt (80) and a peripheral surface (82) of the lip (35).

5. The battery module (20) of one of claims 1 to 4,
wherein the plurality of Li-ion electrochemical cells (32) comprises a plurality of prismatic Li-ion electrochemical cells (32).

6. The battery module (20) of one of claims 1 to 5,
wherein the cover (34) does not comprise metal.

7. The battery module (20) of one of claims 1 to 6,
wherein the main body (33) does not comprise metal.

8. The battery module (20) of one of claims 1 to 7,
wherein the cover (34), the main body (33), or both comprise only plastic.

9. The battery module (20) of one of claims 1 to 7,
wherein the cover (34), the main body (33), or both comprise plastic with glass content.

10. The battery module (20) of one of claims 1 to 5,
wherein the housing (30) comprises a metal layer or film.

11. The battery module (20) of claim 10,
wherein the metal layer or film is disposed in the cover (34) of the housing (30).

12. A method (130) of manufacturing a battery module (20) of one of claims 1 to 11, comprising:
- disposing a plurality of lithium-ion (Li-ion) electrochemical cells (32) into a base (33) of a housing (30) of the battery module (20);
- disposing a plurality of separator plates (42, 100) into the base (33) such that the plurality of separator plates (42, 100) and the plurality of Li-ion electrochemical cells (32) are disposed in a row (40) having an alternating arrangement of Li-ion electrochemical cells (32) and separator plates (42, 100), wherein the separator plates (42, 100) are configured to enable thermal expansion of the Li-ion electrochemical cells (32) during operation of the battery module (20) while maintaining a constant footprint (50) of the row (40);
- disposing a cover (34) of the housing (30) over the base (33) of the housing (30);
- forming the cover (34) such that the cover (34) comprises a skirt (80) extending along a perimeter (63) of the cover (34) and downwardly from the cover (34) toward the base (33); and
- forming the base (33) such that the base (33) comprises a lip (35) extending upwardly from the base (33) toward the cover (34);
- heat sealing the cover (34) to the base (33) with the Li-ion electrochemical cells (32) in the base (33);
wherein heat sealing the cover (34) to the base (33) comprises heat sealing the lip (35) of the base (33) to a bottom surface (62) of the cover (34) disposed inwards from the skirt (80) of the cover (34) such that the skirt (80) of the cover (34) and the lip (35) of the base (33) overlap along a height of the battery module (20).

13. The method (130) of claim 12,
comprising forming each separator plate (42, 100) such that each separator plate (42, 100) comprises at least one cavity disposed proximate to an adjacent one of the Li-ion electrochemical cells (32), such that the adjacent one of the Li-ion electrochemical cells (32) is permitted to expand into the cavity during operation of the battery module (20) without substantially changing the footprint (50) of the row (40).

14. The method (130) of claim 12 or 13,
wherein heat sealing the cover (34) to the base (33) comprises heating a portion of the cover (34), a portion of the base (33), or both with a heating element (90).

15. The method (130) of claim 14,
comprising blocking the heating element (90) from substantially heating the plurality of Li-ion electrochemical cells (32),
wherein blocking the heating element (90) from substantially heating the plurality of Li-ion electrochemical cells (32) preferably comprises utilizing a heating element (90) that only focuses heat along a perimeter of the heating element (90) and the perimeter of the heating element (90) substantially corresponds in shape with the lip (35) of the base (33) of the housing (30) to which the cover (34) is heat sealed.

## Patentansprüche

1. Batteriemodul (20), umfassend:
- eine Mehrzahl von elektrochemischen Lithium-Ionen-(Li-Ionen-)Zellen (32), die in einer Reihe (40) angeordnet ist;
- eine Mehrzahl von Dehnungsaufnahmeelementen, wobei jedes Dehnungsaufnahmeelement so ausgelegt ist, dass es Schwellung einer oder mehrerer elektrochemisches Li-Ionen-Zellen (32) derart aufnimmt, dass ein Fußabdruck (50) der Reihe (40) der Mehrzahl von elektrochemischen Li-Ionen-Zellen (32) während eines Betriebs der Batteriemoduls (20) im Wesentlichen konstant ist; und
- ein Kunststoffgehäuse (30) mit einem Hauptkörper (33), der zum Unterbringen der Mehrzahl von Li-Ionen-Zellen (32) ausgelegt ist, und einer Abdeckung (34), die mit einer Oberfläche (68) des Hauptkörpers (33) heißversiegelt ist;
wobei die Abdeckung (34) des Kunststoffgehäuses (30) eine Einfassung (80) umfasst, die sich nach unten zum Hauptkörper (33) des Kunststoffgehäuses (30) und um einen ersten Umfang (63) der Abdeckung (34) erstreckt, wobei der Hauptkörper (33) des Kunststoffgehäuses (30) eine Lippe (35) umfasst, die sich nach oben zur Abdeckung (34) und um einen zweiten Umfang des Hauptkörpers (33) erstreckt, und wobei die Lippe (35) des Hauptkörpers (33) mit einer Innenfläche der Abdeckung (34), die von der Einfassung (80) der Abdeckung (34) nach innen angeordnet ist, derart heißversiegelt ist, dass die Einfassung (80) der Abdeckung (34) und die Lippe (35) des Hauptkörpers (33) einander entlang der Höhe des Batteriemoduls (20) überlappen.

2. Batteriemodul (20) nach Anspruch 1,
wobei die Mehrzahl von Dehnungsaufnahmeelementen eine Mehrzahl von Trennplatten (42, 100) aufweist, und wobei jede Trennplatte (42, 100) der Mehrzahl von Trennplatten (42, 100) zwischen einer entsprechenden ersten und einer entsprechenden zweiten elektrochemischen Li-Ionen-Zelle (32) der Mehrzahl von elektrochemischen Li-Ionen-Zellen (32) angeordnet ist.

3. Batteriemodul (20) nach Anspruch 2,
wobei jede Trennplatte (100) eine erste Seite (110), die der ersten elektrochemischen Li-Ionen-Zelle (32) zugewandt ist, und eine zweite Seite (112) umfasst, die der zweiten elektrochemischen Li-Ionen-Zelle (32), zugewandt ist, wobei die erste Seite (110) der Trennplatte (100) eine erste Vertiefung (114) umfasst, die zur Aufnahme von Schwellung der ersten elektrochemischen Li-Ionen-Zelle (32) in die erste Vertiefung (114) ausgelegt ist, und die zweite Seite (112) der Trennplatte (100) eine zweite Vertiefung (114) umfasst, die zur Aufnahme von Schwellung der zweiten elektrochemischen Li-Ionen-Zelle (32) in die zweite Vertiefung (114) ausgelegt ist.

4. Batteriemodul (20) nach einem der Ansprüche 1 bis 3,
wobei die Einfassung (80) in Bezug auf die Lippe (35) derart positioniert ist, dass ein radialer Zwischenraum zwischen der Einfassung (80) und einer Umfangsfläche (82) der Lippe (35) angeordnet ist.

5. Batteriemodul (20) nach einem der Ansprüche 1 bis 4,
wobei die Mehrzahl von elektrochemischen Li-Ionen-Zellen (32) eine Mehrzahl von prismatischen elektrochemischen Li-Ionen-Zellen (32) umfasst.

6. Batteriemodul (20) nach einem der Ansprüche 1 bis 5, wobei die Abdeckung (34) kein Metall umfasst.

7. Batteriemodul (20) nach einem der Ansprüche 1 bis 6, wobei der Hauptkörper (33) kein Metall umfasst.

8. Batteriemodul (20) nach einem der Ansprüche 1 bis 7,
wobei die Abdeckung (34), der Hauptkörper (33) oder beide nur Kunststoff umfassen.

9. Batteriemodul (20) nach einem der Ansprüche 1 bis 7,
wobei die Abdeckung (34), der Hauptkörper (33) oder beide Kunststoff mit einem Glasgehalt umfassen.

10. Batteriemodul (20) nach einem der Ansprüche 1 bis 5, wobei das Gehäuse (30) eine Metallschicht oder einen Metallfilm umfasst.

11. Batteriemodul (20) nach Anspruch 10,
wobei die Metallschicht oder der Metallfilm in der Abdeckung (34) des Gehäuses (30) angeordnet ist.

12. Verfahren (130) zur Herstellung eines Batteriemoduls (20) nach einem der Ansprüche 1 bis 11, umfassend:
- Anordnen einer Mehrzahl von elektrochemischen Lithium-Ionen-(Li-Ionen)Zellen (32) in einer Basis (33) eines Gehäuses (30) des Batteriemoduls (20);
- derartiges Anordnen einer Mehrzahl von Trennplatten (42, 100) in der Basis (33), dass die Mehrzahl von Trennplatten (42, 100) und die Mehrzahl von elektrochemischen Li-Ionen-Zellen (32) in einer Reihe (40) mit einer abwechselnden Anordnung von elektrochemischen Li-Ionen-Zellen (32) und Trennplatten (42, 100) angeordnet sind, wobei die Trennplatten (42, 100) so ausgelegt sind, dass sie Wärmeausdehnung der elektrochemischen Li-Ionen-Zellen (32) während eines Betriebs des Batteriemoduls (20) bei Aufrechterhaltung eines konstanten Fußabdrucks (50) der Reihe (40) ermöglichen;
- Anordnen einer Abdeckung (34) des Gehäuses (30) über der Basis (33) des Gehäuses (30);
- derartiges Ausbilden der Abdeckung (34), dass die Abdeckung (34) eine Einfassung (80) umfasst, die sich entlang eines Umfangs (63) der Abdeckung (34) und von der Abdeckung (34) nach unten zur Basis (33) erstreckt; und
- derartiges Ausbilden der Basis (33), dass die Basis (33) eine Lippe (35) umfasst, die sich von der Basis (33) nach oben zur Abdeckung (34) erstreckt;
- Heißversiegeln der Abdeckung (34) mit der Basis (33) mit den elektrochemischen Li-Ionen-Zellen (32) in der Basis (33);
wobei das Heißversiegeln der Abdeckung (34) mit der Basis (33) ein derartiges Heißversiegeln der Lippe (35) der Basis (33) mit einer Unterseite (62) der Abdeckung (34), die von der Einfassung (80) der Abdeckung (34) nach innen angeordnet ist, umfasst, dass die Einfassung (80) der Abdeckung (34) und die Lippe (35) der Basis (33) einander entlang einer Höhe des Batteriemoduls (20) überlappen.

13. Verfahren (130) nach Anspruch 12,
umfassend ein derartiges Ausbilden jeder Trennplatte (42, 100), dass jede Trennplatte (42, 100) mindestens einen Hohlraum umfasst, der in unmittelbarer Nähe zu einer benachbarten der elektrochemischen Li-Ionen-Zellen (32) derart angeordnet ist, dass die benachbarte der elektrochemischen Li-Ionen-Zellen (32) sich während eines Betriebs des Batteriemoduls (20) ohne wesentliche Änderung des Fußabdrucks (50) der Reihe (40) in den Hohlraum ausdehnen kann.

14. Verfahren (130) nach Anspruch 12 oder 13,
wobei das Heißversiegeln der Abdeckung (34) mit der Basis (33) ein Erhitzen eines Abschnitts der Abdeckung (34), eines Abschnitts der Basis (33) oder beider mit einem Heizelement (90) umfasst.

15. Verfahren (130) nach Anspruch 14,
umfassend ein Verhindern, dass das Heizelement (90) die Mehrzahl von elektrochemischen Li-Ionen-Zellen (32) wesentlich erhitzt,
wobei das Verhindern, dass das Heizelement (90) die Mehrzahl von elektrochemischen Li-Ionen-Zellen (32) wesentlich erhitzt, vorzugsweise ein Verwenden eines Heizelements (90) umfasst, das Wärme nur entlang eines Umfangs des Heizelements (90) konzentriert, und wobei der Umfang des Heizelements (90) eine Form aufweist, die im Wesentlichen der Lippe (35) der Basis (33) des Gehäuses (30) entspricht, mit der die Abdeckung (34) heißversiegelt wird.

## Revendications

1. Module de batterie (20), comprenant :
- une pluralité de cellules électrochimiques au lithium-ion (Li-ion) (32) disposées dans une rangée (40) ;
- une pluralité d'éléments encaissant la dilatation, chaque élément recevant la dilatation étant configuré pour encaisser le gonflement d'une ou plusieurs cellules électrochimiques Li-ion (32) de telle sorte qu'une empreinte (50) de la rangée (40) de la pluralité de cellules électrochimiques Li-ion (32) est sensiblement constante pendant le fonctionnement du module de batterie (20) ; et
- un boîtier en plastique (30) ayant un corps principal (33) configuré pour recevoir la pluralité de cellules électrochimiques Li-ion (32), et un couvercle (34) thermoscellé à une surface (68) du corps principal (33) ;
dans lequel le couvercle (34) du boîtier en plastique (30) comprend une jupe (80) s'étendant vers le bas vers le corps principal (33) du boîtier en plastique (30) et autour d'un premier périmètre (63) du couvercle (34), dans lequel le corps principal (33) du boîtier en plastique (30) comprend une lèvre (35) s'étendant vers le haut vers le couvercle (34) et autour d'un deuxième périmètre du corps principal (33), et dans lequel la lèvre (35) du corps principal (33) est thermoscellée à une surface interne du couvercle (34) disposée vers l'intérieur par rapport à la jupe (80) du couvercle (34) de telle sorte que la jupe (80) du couvercle (34) et la lèvre (35) du corps principal (33) se chevauchent le long d'une hauteur du module de batterie (20).

2. Module de batterie (20) de la revendication 1,
dans lequel la pluralité d'éléments encaissant la dilatation comprend une pluralité de plaques de séparation (42, 100), et dans lequel chaque plaque de séparation (42, 100) de la pluralité de plaques de séparation (42, 100) est disposée entre une première et une deuxième cellule électrochimique Li-ion (32) correspondantes de la pluralité de cellules électrochimiques Li-ion (32).

3. Module de batterie (20) de la revendication 2,
dans lequel chaque plaque de séparation (100) comprend un premier côté (110) faisant face à la première cellule électrochimique Li-ion (32) et un deuxième côté (112) faisant face à la deuxième cellule électrochimique Li-ion (32), le premier côté (110) de la plaque de séparation (100) comprenant une première encoche (114) configurée pour encaisser le gonflement de la première cellule électrochimique Li-ion (32) à l'intérieur de la première encoche (114), et le deuxième côté (112) de la plaque de séparation (100) comprenant une deuxième encoche (114) configurée pour encaisser le gonflement de la deuxième cellule électrochimique Li-ion (32) à l'intérieur de la deuxième encoche (114).

4. Module de batterie (20) d'une des revendications 1 à 3,
dans lequel la jupe (80) est positionnée par rapport à la lèvre (35) de telle sorte qu'un espace radial est disposé entre la jupe (80) et une surface périphérique (82) de la lèvre (35).

5. Module de batterie (20) d'une des revendications 1 à 4,
dans lequel la pluralité de cellules électrochimiques Li-ion (32) comprend une pluralité de cellules électrochimiques Li-ion prismatiques (32).

6. Module de batterie (20) d'une des revendications 1 à 5,
dans lequel le couvercle (34) ne comprend pas de métal.

7. Module de batterie (20) d'une des revendications 1 à 6,
dans lequel le corps principal (33) ne comprend pas de métal.

8. Module de batterie (20) d'une des revendications 1 à 7,
dans lequel le couvercle (34), le corps principal (33), ou les deux comprennent uniquement du plastique.

9. Module de batterie (20) d'une des revendications 1 à 7,
dans lequel le couvercle (34), le corps principal (33), ou les deux comprennent du plastique avec une teneur en verre.

10. Module de batterie (20) d'une des revendications 1 à 5,
dans lequel le boîtier (30) comprend une couche ou un film, métallique.

11. Module de batterie (20) de la revendication 10,
dans lequel la couche ou le film métallique est disposé dans le couvercle (34) du boîtier (30).

12. Procédé (130) de fabrication d'un module de batterie (20) d'une des revendications 1 à 11, comprenant :
- la mise en place d'une pluralité de cellules électrochimiques au lithium-ion (Li-ion) (32) dans un fond (33) d'un boîtier (30) du module de batterie (20) ;
- la mise en place d'une pluralité de plaques de séparation (42, 100) dans le fond (33) de telle sorte que la pluralité de plaques de séparation (42, 100) et la pluralité de cellules électrochimiques Li-ion (32) soient disposées dans une rangée (40) ayant un agencement alterné de cellules électrochimiques Li-ion (32) et de plaques de séparation (42, 100), les plaques de séparation (42, 100) étant configurées pour permettre une dilatation thermique des cellules électrochimiques Li-ion (32) pendant le fonctionnement du module de batterie (20) tout en maintenant une empreinte constante (50) de la rangée (40) ;
- la mise en place d'un couvercle (34) du boîtier (30) sur le fond (33) du boîtier (30) ;
- la formation du couvercle (34) de telle sorte que le couvercle (34) comprenne une jupe (80) s'étendant le long d'un périmètre (63) du couvercle (34) et vers le bas depuis le couvercle (34) vers le fond (33) ; et
- la formation du fond (33) de telle sorte que le fond (33) comprenne une lèvre (35) s'étendant vers le haut depuis le fond (33) vers le couvercle (34) ;
- le thermoscellage du couvercle (34) au fond (33) avec les cellules électrochimiques Li-ion (32) dans le fond (33) ;
dans lequel le thermoscellage du couvercle (34) au fond (33) comprend le thermoscellage de la lèvre (35) du fond (33) à une surface inférieure (62) du couvercle (34) disposée vers l'intérieur par rapport à la jupe (80) du couvercle (34) de telle sorte que la jupe (80) du couvercle (34) et la lèvre (35) du fond (33) se chevauchent le long d'une hauteur du module de batterie (20) .

13. Procédé (130) de la revendication 12,
comprenant la formation de chaque plaque de séparation (42, 100) de telle sorte que chaque plaque de séparation (42, 100) comprenne au moins une cavité disposée à proximité d'une cellule adjacente parmi les cellules électrochimiques Li-ion (32), de telle sorte que la cellule adjacente parmi les cellules électrochimiques Li-ion (32) peut se dilater à l'intérieur de la cavité pendant le fonctionnement du module de batterie (20) sans changer sensiblement l'empreinte (50) de la rangée (40).

14. Procédé (130) de la revendication 12 ou 13,
dans lequel le thermoscellage du couvercle (34) au fond (33) comprend le chauffage d'une partie du couvercle (34), d'une partie du fond (33), ou des deux avec un élément chauffant (90).

15. Procédé (130) de la revendication 14,
comprenant l'action d'empêcher l'élément chauffant (90) de chauffer sensiblement la pluralité de cellules électrochimiques Li-ion (32),
dans lequel l'action d'empêcher l'élément chauffant (90) de chauffer sensiblement la pluralité de cellules électrochimiques Li-ion (32) comprend de préférence l'utilisation d'un élément chauffant (90) qui focalise la chaleur uniquement le long d'un périmètre de l'élément chauffant (90) et la forme du périmètre de l'élément chauffant (90) correspond sensiblement à celle de la lèvre (35) du fond (33) du boîtier (30) à laquelle le couvercle (34) est thermoscellé.
